# EUROPEAN PATENT APPLICATION

(11) **EP 4 779 972 A1**
(43) Date of publication of application: **22.07.2026**
(21) Application number: 25152801.4
(22) Date of filing: 20.01.2025
(51) Int. Cl.: H04N 17/00, H04N 23/51, H04N 23/55

(54) **AN OPTICAL SAFETY DEVICE WITH A TRANSPARENT SCREEN ELEMENT**

(71) Applicant: Inxpect S.p.A., 25131 Brescia (BS) (IT)
(72) Inventor: Salgarelli, Luca, 25131 Brescia BS (IT)
(74) Representative: Perani & Partners S.p.A.

(57) **Abstract**

An optical safety device (1) comprises a casing (2), a lens opening (22), an image sensor (3), and a control system configured to receive and process digital image data collected by the image sensor (3). A screen element (5a, 5b) is mounted to the casing (2) and has a transparent area (51). In an active configuration, the screen element (5a, 5b) is arranged in an active position in front of the lens element (4), such that the environment is visible from the image sensor (3) through the lens element (4) and the transparent area (51), and the screen element (5a, 5b) has a marker image (52) on the transparent area (51). In an inactive configuration, no marker image (52) on the screen element (5a, 5b) is visible from the image sensor (3). The control system commands the screen element (5a, 5b) to switch between the active and inactive configurations, and in the active configuration identifies the marker image (52) in the digital image data and use it for a calibration or diagnostic processing.

## Description

### Field of the invention

The present invention relates to the field of optical devices for safety applications, such as to identify dangers for workers.

### Background of the invention

In safety applications, many sensors can be used to identify dangerous situations for workers, such as a worker approaching a machinery with moving parts. Depending on the dangers detected, a control system may automatically slow or stop the machinery, or launch an alarm, to prevent the harm of workers.

In order to rely on these automatic measures, it is of the utmost importance that the sensors are fully operating in optimal conditions. Therefore, any fault or failure of the sensor must be identified, and the sensor must be correctly calibrated, adapting to varying conditions of the surrounding environment.

US 20080291318 shows an example of an optical device, where a marking device, such as a light source, may be arranged on a side of the lens to be visible from the image sensor. The appearance of the marker device is used to check the current optical properties of the lens.

However, this side position of the marker device requires, on one side, that the image sensor also collects image data from outside the perimeter of the image of the outside environment projected by the lens, and on the other side that additional room and support for the marker device is provided in delicate areas like the side of the lens and the region between the lens and the image sensor. Moreover, this position of the marker device is of no help in identifying issues on the outer surface of the lens.

### Summary of the invention

An object of the present invention is to provide an alternative arrangement for a marker device to detect abnormal optical or processing conditions, or to calibrate the optical device.

In particular, it is an objective of the present invention to overcome the drawbacks described above for the prior art.

These and other objectives are achieved by an optical safety device according to any one of the appended claims.

The invention provides a screen element mounted to the casing and having a transparent area. In an active configuration, the screen element is arranged in an active position in front of the lens element, such that the environment is visible from the image sensor through the lens element and the transparent area, and the screen element has a marker image on the transparent area. The marker image is visible from the image sensor through the lens element, and can be used for diagnostic or calibration purposes. The marker image can be placed in such a position as to appear inside the image of the environment focused by the lens element, and therefore the image sensor does not need to collect further data outside this image.

In an inactive configuration, no marker image on the screen element is visible from the image sensor, and the screen element leaves unobstructed the vision of the environment by the image sensor through the lens element. Thus, a control system may command the marker image to periodically appear only when required, and it will disappear during the regular operation of the optical safety device.

In preferred embodiments, the alternation of the active and inactive configurations may be achieved by moving the marker element, for example in the form of a shutter-like curtain, or by providing a marker element in the form of display showing and hiding the marker image.

### Brief description of the drawings

The present invention will now be described in more detail hereinafter with reference to the accompanying drawings, in which embodiments of the invention are shown.
FIG. 1 is a perspective view of an optical safety device according to a first embodiment of the present invention, with a screen element in an active configuration,
FIG. 2 is a perspective view of the optical safety device of figure 1, with the screen element in an inactive configuration,
FIG. 3 is a perspective view of an optical safety device according to a second embodiment of the present invention, with the screen element in the active configuration,
FIG. 4 is a perspective view of the optical safety device of figure 3, with the screen element in the inactive configuration,
FIG. 5 is a partial section view of the optical safety device of figure 1, with the screen element in the inactive configuration,
FIG. 6 is a partial section view of the optical safety device of figure 1, with the screen element in the active configuration, and
FIG. 7 is a partial section view of the optical safety device of figure 3.

### Detailed description

An optical safety device is indicated in the drawing with number 1. The device 1 comprises a casing 2 with an inner volume 21. The inner volume 21 may accommodate various components known to the skilled person, such as electronic and processing equipment to perform the functions detailed below as well as other functions. In some embodiments, beside the optical and imaging components described below, the casing 2 may further accommodate other sensors, such as a radar, lidar or microwave sensors.

An image sensor 3 is arranged in the inner volume 21, and is configured to generate digital image data based on light incoming on a sensitive surface of the image sensor 3.

The device 1 further comprises a lens element 4, comprising an optical lens.

The casing 2 comprises a lens opening 22, facing the inner volume 21 on one side, and an outside environment on another side. The lens element 4 is fitted in the lens opening 22.

The image sensor 3 is arranged behind the lens opening 22 and the lens element 4. The lens element 4 is configured to focus on the image sensor 3 an optical image of the environment outside the casing 2.

In more detail, the lens element 4 is configured to focus the optical image along a main optical axis X-X. The lens element 4 is arranged transverse to the main optical axis X-X. Similarly, the image sensor, in particular the sensitive surface thereof, is arranged transverse to a main optical axis X-X.

The device 1 comprises a control system (not shown), which is preferably accommodated in the inner volume 21 of the casing 2. The control system is in signal communication with the image sensor 3, and is configured to receive and process the digital image data collected by the image sensor 3. The processing of the image data by the control system may comprise, for example, outputting a digital image of the environment. Preferably, the processing of the image data by the control system comprises a predetermined detection processing, such as identifying targets (for example human targets) from the image data, or checking from the image data if one or more predetermined dangerous situations occur. In the detection processing, the control system may further fuse the image data with data from another sensor, such as radar, lidar or microwave sensor.

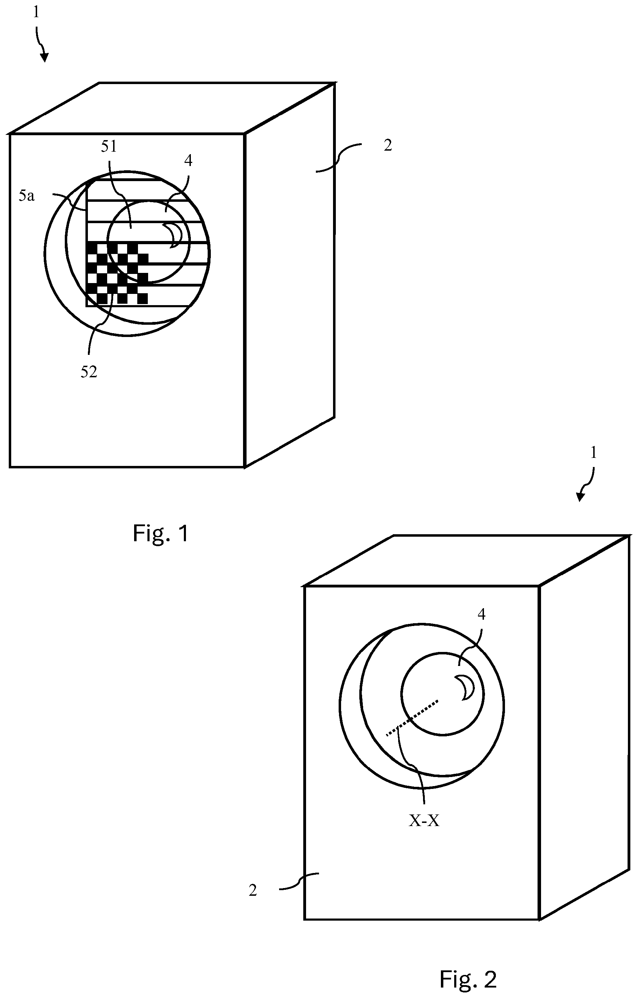

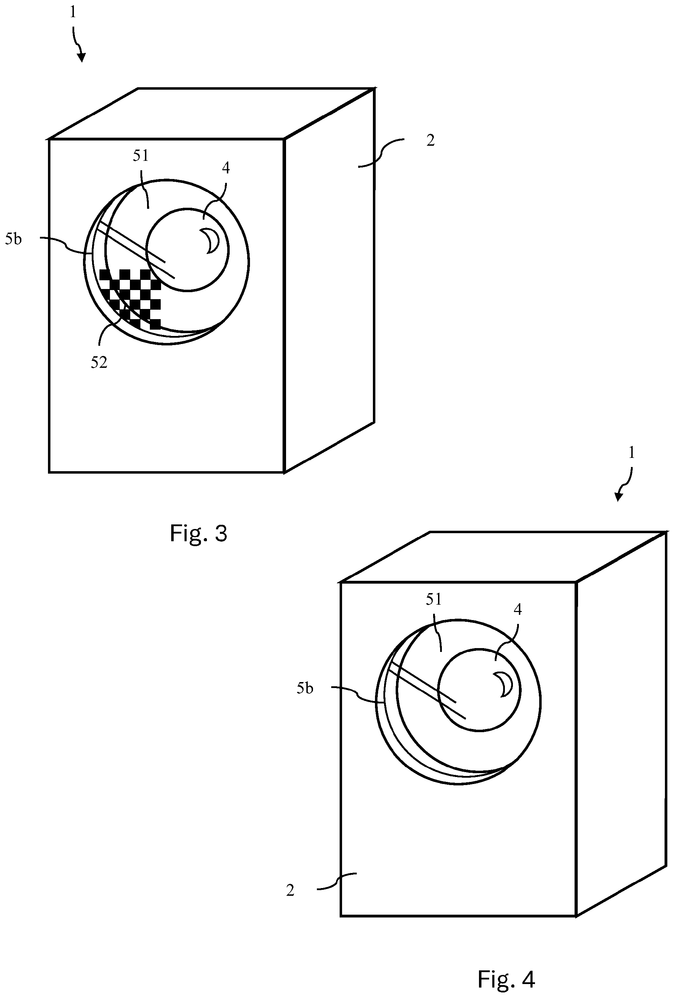

The device 1 comprises a screen element 5a, 5b mounted to the casing 2 and having a transparent area 21. In one preferred embodiment (figures 1-2, 5-6), the screen element 5a, 5b is a movable transparent element 5a, such as a movable transparent curtain 5a. In another preferred embodiment (figures 3-4, 7), the screen element 5 is a fixed transparent display 5b, preferably a LCD display 5b.

The screen element 5a, 5b is configured to switch between an active configuration and an inactive configuration. In the active configuration, the screen element 5a, 5b is arranged in an active position better described below. In the inactive configuration, depending on the embodiment, the screen element 5a, 5b could be moved in an inactive position, such as in the curtain embodiment, or could remain in the active position and be subject to other changes, such as in the display embodiment.

In both cases, in the active position, the screen element 5a, 5b is arranged in front of the lens element 4, namely outside the casing 2, such that the outside environment is visible from the image sensor 3 through the lens element 3 and the transparent area 51 of the screen element 5a, 5b. In particular, the screen element 5a, 5b, lens element 4 and image sensor 3 are aligned along the main optical axis X-X, with the lens element 4 arranged between the image sensor 3 and the screen element 5a, 5b. The screen element 5a, 5b is arranged transversally to the main optical axis X-X.

In the active configuration, the screen element 5a, 5b has a marker image 52 on the transparent area 51. The marker image 52 is arranged to be visible from the image sensor 3 through the lens element 4. In other words, the marker image 52 must be arranged so that the lens element 4 focuses the marker image 52 on the sensitive surface of the image sensor 3.

In the active configuration, the control system is configured to identify the marker image 52 in the digital image data received from the image sensor 3, and use the marker image for a predetermined calibration or diagnostic processing.

Preferably, a predetermined diagnostic processing comprises comparing the marker image 52 identified in the digital image data with a pre-stored reference marker image. Thus, the control system may launch a diagnostic alarm in case the marker image 52 differs from the reference marker image by more than a predetermined threshold under one or more predetermined image parameters.

Another kind of predetermined diagnostic processing comprises checking if the marker image 52 can be actually identified in the digital image, when in the active configuration. In the negative case, the control system is configured to launch a diagnostic alarm.

A predetermined calibration or diagnostic processing may also comprise, without necessarily a comparison with pre-stored images, determining at least one image parameter from the marker image 52 identified in the digital image data. The determined parameters may be used by the control system to adjust one or more optical settings.

Preferably, the image parameters are selected between focus, brightness, contrast, white balance and zoom.

The diagnostic alarm can be in the form of a visual or acoustic signal, or in the form of a control signal for an external dangerous equipment, the control signal causing the external equipment to trigger a physical safety measure, such as stopping a moving part or concealing or deactivating a dangerous part.

In order to enable the above calibration and diagnostic processing, the marker image 52 may have any appearance already known to the skilled person, such as predetermined geometric patterns, for example a chessboard pattern, which can be monochromatic or polychromatic.

While the active configuration is optimal for calibration and/or diagnostics, the appearance of the marker image 52 superimposed with the optical image may be an obstacle for correct processing of the optical image of the environment, in particular for the detection processing. Thus, the control system is configured to command the switching of the screen element 5a, 5b between the active and inactive configurations.

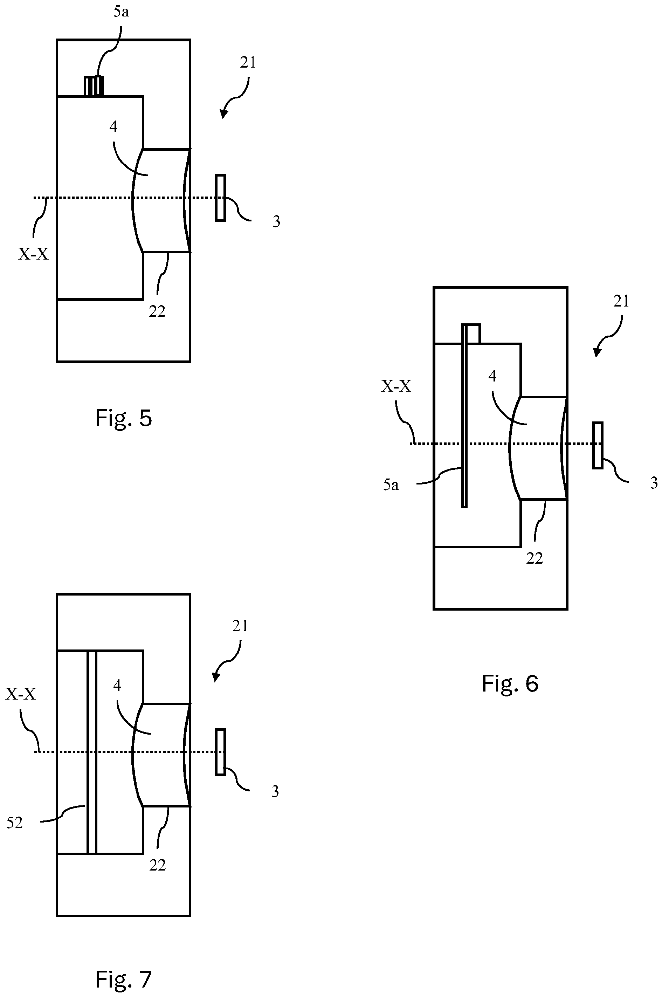

In the inactive configuration, no marker image 52 on the screen element 5a, 5b is visible from the image sensor 3. This may be caused by the marker image 52 disappearing from the screen element 5a, 5b, such as in the display embodiment (figure 4), or by the marker image 52 moving to a position where the lens element 4 will no more focus it on the sensitive surface of the image sensor 3, such as in the curtain embodiment (figures 2 and 6).

In both cases, the screen element 5a, 5b must leave unobstructed the vision of the environment by the image sensor 3 through the lens element 4. This may be obtained by the screen element 5a, 5b moving in an inactive position where it is out of the sight of the image sensor 3 (that is, in a position where the lens element 4 does not focus it on the image sensor 3), or by the image sensor seeing the environment through the lens element 4 and the transparent area 51 of the screen element 5a, 5b, where the marker image 52 has disappeared.

In the embodiment where the screen element 5a, 5b is a movable transparent element 5a, the marker image 52 is preferably permanently represented on the screen element 5a. In the inactive configuration, the screen element 5a is retracted from the active position. Preferably, the casing 2 comprises a recess in front of the lens opening 22. The screen element 5a is received in the recess when in the inactive position.

In more detail, in this embodiment the screen element 5 can be a flexible curtain that is configured to be winded on a roller, or a curtain composed of rigid slats configured to be recollected by overlapping to each other or separated in opposite directions. An actuator (not shown) is configured to deploy the screen element 5a in the active position and retract it therefrom. The control system is configured to control the actuator to switch the screen element 5a between the active and inactive configurations.

Examples of suitable actuators and curtains can be similar to the actuators and curtains commonly used as optical shutters, with the difference that the screen element 5a must have the transparent area 51 and the marker image 52.

In the display embodiment, the display 5b is fixed in the active position both in the active and in the inactive configuration. The control system is configured to control the display 5b to show the marker image 52 in the active configuration and to make the marker image 52 disappear in the inactive configuration. In particular, the display 5b may have one or more electric connectors configured to receive control signals for displaying one or more predetermined images. Optionally, different marker images 52 may appear at different times while in the active configuration.

Thus, when the marker image 52 disappears, the inactive display 5b can be visible, which can be transparent, for example being a LCD display 5b, such that the environment can be visible despite the display is present.

## Claims

1. An optical safety device (1), comprising:
- a casing (2) with an inner volume (21) and a lens opening (22),
- an image sensor (3) arranged in the inner volume (21), behind the lens opening (22),
- a lens element (4) fitted in the lens opening (22) and configured to focus on the image sensor (3) an optical image of an environment outside the casing (2),
- a control system configured to receive and process digital image data collected by the image sensor (3),
**characterized by:**
- a screen element (5a, 5b) mounted to the casing (2) and having a transparent area (51), the screen element (5a, 5b) being configured to switch between an active configuration and an inactive configuration,
wherein:
- in the active configuration, the screen element (5a, 5b) is arranged in an active position in front of the lens element (4), such that the environment is visible from the image sensor (3) through the lens element (4) and the transparent area (51), and the screen element (5a, 5b) has a marker image (52) on the transparent area (51), the marker image (52) being arranged to be visible from the image sensor (3) through the lens element (4),
- in the inactive configuration, no marker image (52) on the screen element (5a, 5b) is visible from the image sensor (3) and the screen element (5a, 5b) leaves the vision of the environment by the image sensor (3) through the lens element (4) unobstructed, and
- the control system is configured to command switching of the screen element (5a, 5b) between the active and inactive configurations, and is further configured, in the active configuration, to identify the marker image (52) in the digital image data and use the marker image (52) for a predetermined calibration or diagnostic processing.

2. The device (1) of claim 1, wherein:
- the screen element (5a, 5b) is a movable transparent element (5a) having the marker image (52) permanently represented thereon,
- in the inactive configuration, the screen element (5a, 5b) is retracted from the active position.

3. The device (1) of claim 2, wherein the movable transparent element (5a) is a movable transparent curtain.

4. The device (1) of claim 2 or 3, comprising an actuator configured to deploy the screen element (5a, 5b) in the active position and retract it therefrom, the actuator being controllable by the control system.

5. The device (1) of claim 1, wherein:
- the screen element (5a, 5b) is a fixed transparent display (5b), which is in the active position both in the active configuration and in the inactive configuration, preferably a LCD display, and
- the display (5b) is controllable to show the marker image (52) in the active configuration and to make the marker image (52) disappear from the transparent area (51) in the inactive configuration.

6. The device (1) of any claim 1-5, wherein the image sensor (3), the lens element (4) and the screen element (5a, 5b), when in the active position, are arranged transverse to a main optical axis, the lens element (4) being arranged between the image sensor (3) and the screen element (5a, 5b).

7. The device (1) of any claim 1-6, wherein the marker image (52) is a predetermined monochromatic or polychromatic geometric pattern.

8. The device (1) of any claim 1-7, wherein the predetermined calibration or diagnostic processing comprises:
- comparing the marker image (52) identified in the digital image data with a reference marker image (52), and/or
- determining at least one image parameter from the marker image (52) identified in the digital image data, the image parameter being preferably selected between focus, brightness, contrast, white balance and zoom.

9. The device (1) of any claim 1-8, wherein the control system is configured to launch a diagnostic alarm in case no marker image (52) can be identified in the digital image data when the screen element (5a, 5b) is in the active configuration.
